# EUROPEAN PATENT SPECIFICATION

(11) **EP 3 138 712 B1**
(45) Date of publication and mention of the grant of the patent: **07.02.2018**
(21) Application number: 16181618.6
(22) Date of filing: 28.07.2016
(51) Int. Cl.: B60K 1/00, B60K 17/24, B60K 17/356, B60K 17/16, F16H 48/08, F16H 57/02, F16H 57/037

(54) **VEHICLE DRIVE APPARATUS**
FAHRZEUGANTRIEBSVORRICHTUNG
DISPOSITIF D'ENTRAÎNEMENT DE VÉHICULE

(30) Priority: 25.08.2015 JP 2015165684
(43) Date of publication of application: 08.03.2017
(73) Proprietor: AISIN SEIKI KABUSHIKI KAISHA, Kariya-shi Aichi 448-8650 (JP)
(72) Inventor: OGAWA, Kazumi, Kariya-shi Aichi 448-8650 (JP); KIMURA, Tsuyoshi, Kariya-shi Aichi 448-8650 (JP)
(74) Representative: Kramer Barske Schmidtchen Patentanwälte PartG mbB

(56) References cited:
- EP-A1- 2 878 857
- WO-A1-2015/039611
- JP-A- 2009 121 553
- JP-A- 2010 246 180

## Description

### TECHNICAL FIELD

This disclosure relates to a vehicle drive apparatus.

### BACKGROUND DISCUSSION

JP 2009-121553A (Reference 1) and JP 2010-246180A (Reference 2) each disclose a vehicle drive apparatus according to the preamble of claim 1. The vehicle drive apparatus disclosed in References 1 and 2 transmits power of an electric motor (drive source) to a pair of output shafts (drive axles) via a speed reduction mechanism and a differential apparatus. The rotation of vehicle wheels is driven via drive shafts connected to first end portions of the drive axles.

In order to improve safety of a vehicle, in vehicle development, research on how much the motion of the vehicle is affected is performed based on the assumption that damage to a configuration member of the vehicle occurs. For example, in a case where a vehicle runs over a curb while the vehicle travels at a predetermined speed or higher, and both vehicle wheels are locked, it can be considered that an excessive load is applied to a drive path from a drive source to the vehicle wheels. In a case where it is assumed that a shaft member exposed externally from a drive shaft is cut due to such an excessive load, it can be considered that the shaft member whirls underneath a floor panel of the vehicle, and interferes with the vehicle or a road surface, thereby affecting the motion of the vehicle.

### SUMMARY

Thus, a need exists for a vehicle drive apparatus that is capable of preventing an excessive load from affecting the motion of a vehicle even if the excessive load is applied to a drive path from a drive source to vehicle wheels.

A vehicle drive apparatus according to the invention includes: a drive source; a pair of drive axles which drives the rotation of vehicle wheels with power, which is transmitted from the drive source, via drive shafts connected to first end portions of the pair of drive axles; a transmission unit that is connected to second end portions of the pair of drive axles, and transmits the power of the drive source to the pair of drive axles; a casing that accommodates at least the transmission unit, and is provided with a pair of opening portions through which the pair of drive axles pass such that the first end portions are positioned outside the casing; a pair of bearings which rotatably support one drive axle of the pair of drive axles inside the casing; and a cylindrical member which is formed into a cylindrical shape with both open ends, and in which the one drive axle is disposed between the pair of bearings in such a way as to coaxially pass through the cylindrical member. The one drive axle includes a predetermined diameter shaft portion, the shaft diameter of which is set such that an outer circumferential wall surface is spaced by a predetermined distance from an inner circumferential wall surface of the cylindrical member inside the cylindrical member in a radial direction. A recessed portion is formed in the outer circumferential wall surface of the predetermined diameter shaft portion.

In a case where an excessive load is applied to a drive path from the drive source to the vehicle wheels, stress may concentrate at the recessed portion formed in the outer circumferential wall surface of the drive axle. Since the recessed portion is positioned inside the casing, it is possible to form a weak portion, which is cut by an excessive load, on the drive path inside the casing. Therefore, even if it is assumed that the drive axle is cut at the position of the recessed portion, it is possible to prevent a cut portion of the drive axle from oscillating outside a vehicle, or to prevent contact between the cut portion of the drive axle and the vehicle or a road surface. As a result, even if an excessive load is applied to the drive path, it is possible to prevent the excessive load from affecting the motion of the vehicle.

In the vehicle drive apparatus according to the invention, the recessed portion may be provided at a position that is spaced by a predetermined distance from the opening portion, through which the one drive axle passes, in the direction of an axial line of the one drive axle.

In the vehicle drive apparatus according to the invention, the length of the one drive axle in the direction of the axial line may be set to be longer than that of the other drive axle of the pair of drive axles in the direction of the axial line.

In the vehicle drive apparatus according to the invention, an annular protrusion portion may be formed in the vicinity of the recessed portion on the outer circumferential wall surface of the one drive axle such that the protrusion portion protrudes outward over the entire circumference of the one drive axle in the radial direction, and a tip end portion is formed as a curved surface.

In the vehicle drive apparatus according to the invention, the transmission unit may further include a differential apparatus that distributes power of the drive source to the pair of drive axles.

In the vehicle drive apparatus according to the invention, the drive source may be an electric motor, and is disposed inside the casing, and the cylindrical member may be an output shaft of the electric motor.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a skeleton view illustrating a schematic configuration of a rear transaxle of a vehicle in a first embodiment disclosed here;
Fig. 2 is a partial longitudinal sectional view of the rear transaxle illustrated in Fig. 1; and
Fig. 3 is a partial and enlarged longitudinal sectional view of a drive axle of a rear transaxle of a vehicle in a second embodiment disclosed here.

### DETAILED DESCRIPTION

### First Embodiment

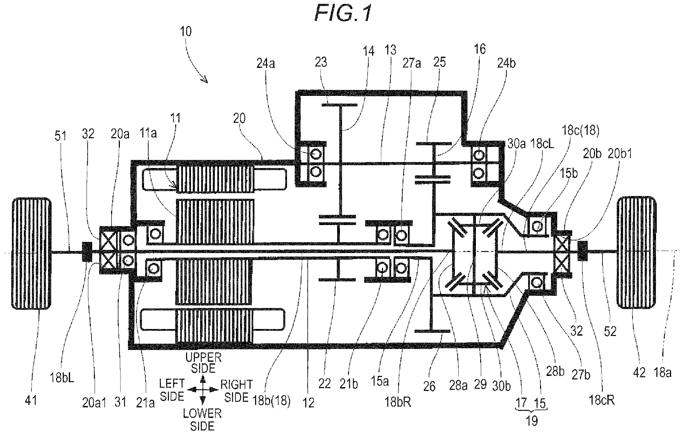

Hereinafter, a vehicle drive apparatus of a first embodiment disclosed here will be described with reference to the accompanying drawings. The vehicle drive apparatus of the first embodiment is a rear transaxle 10 that drives rear wheels 41 and 42 (equivalent to vehicle wheels disclosed here) of an electric four-wheel drive vehicle (hereinafter, referred to as a vehicle). Front wheels (not illustrated) of the vehicle are driven by power of an engine (not illustrated). In this specification, for the purpose of description, an upper side and a lower side in Fig. 1 respectively refer to an upper side and a lower side of the rear transaxle 10, and similarly, a right side and a left side respectively refer to a right side and a left side of the rear transaxle 10. In Figs. 1 to 3, each direction is illustrated by an arrow.

As illustrated in Fig. 1, the rear transaxle 10 includes an electric motor 11 (equivalent to a drive source disclosed here); an output shaft 12 (equivalent to a cylindrical member disclosed here); a countershaft 13; a first speed reduction gear pair 14; a differential case 15; a second speed reduction gear pair 16; a differential mechanism 17; a pair of drive axles 18; and a transaxle case 20 (equivalent to a casing disclosed here).

The output shaft 12 is an output shaft of the electric motor 11. The output shaft 12 is formed into a cylindrical shape with both open ends. The output shaft 12 is disposed coaxially with an axial line 18a of the pair of drive axles 18. A rotor 11a of the electric motor 11 is connected to a central portion of an outer circumferential wall surface of the output shaft 12. A pair of bearings 21a and 21b are respectively installed on both end sides of the output shaft 12. The bearings 21a and 21b are rolling bearings. The output shaft 12 is rotatably supported by the transaxle case 20 via the pair of bearings 21a and 21b.

The countershaft 13 is disposed higher than and parallel to the output shaft 12.

The first speed reduction gear pair 14 includes a small-diameter counter drive gear 22 and a large-diameter counter driven gear 23. The counter drive gear 22 is integrally fixed to a right end portion of the output shaft 12. The counter driven gear 23 is integrally fixed to a left end side of the countershaft 13 in a state where the counter driven gear 23 meshes with the counter drive gear 22. A pair of bearings 24a and 24b are respectively fitted onto both end portions of the countershaft 13. The bearings 24a and 24b are rolling bearings. The countershaft 13 is rotatably supported by the transaxle case 20 via the pair of bearings 24a and 24b.

The differential case 15 accommodates the differential mechanism 17 (to be described later). The differential case 15 is disposed on the right side of the output shaft 12. The differential case 15 is formed into a cylindrical shape, and includes boss portions 15a and 15b which are respectively disposed on both sides in the direction of the axial line 18a while being coaxial with the axial line 18a. A pair of bearings 27a and 27b are respectively fitted onto outer circumferential surfaces of the boss portions 15a and 15b. The bearings 27a and 27b are tapered roller bearings, and pressurization is applied thereto. The differential case 15 is supported by the transaxle case 20 via the pair of bearings 27a and 27b such that the differential case 15 is capable of rotating around the axial line 18a which is the center of a rotational axis.

The second speed reduction gear pair 16 is disposed along the direction of the axial line 18a while being shifted to the right side from the first speed reduction gear pair 14. The second speed reduction gear pair 16 includes a small-diameter final drive gear 25 and a large-diameter final driven gear 26. The final drive gear 25 is integrally fixed to a right end portion of the countershaft 13. The final driven gear 26 is disposed along the direction of the axial line 18a while being shifted to the right side from the counter drive gear 22. The final driven gear 26 is fitted onto, and is integrally fixed to an outer circumferential portion of the differential case 15 in a state where the final driven gear 26 meshes with the final drive gear 25. That is, the final driven gear 26 is rotatably supported by the transaxle case 20 via the pair of bearings 27a and 27b.

The differential mechanism 17 is a typical well-known bevel gear type. The differential mechanism 17 includes a pair of side gears 28a and 28b; a pinion shaft 29; and a pair of pinion gears 30a and 30b. The side gears 28a and 28b are disposed on the center of the rotational axis (axial line 18a) inside the differential case 15 in such a way as to face each other. The pinion shaft 29 is fixed to the differential case 15 in a state where the pinion shaft 29 is positioned between the side gears 28a and 28b, and is perpendicular to the center of a rotational axis of the differential case 15. The pair of pinion gears 30a and 30b are rotatably supported by the pinion shaft 29, and are disposed to mesh with the pair of side gears 28a and 28b.

The pair of drive axles 18 are integrally connected to the pair of side gears 28a and 28b. The pair of drive axles 18 will be described in detail later.

The differential mechanism 17 and the differential case 15 form a differential gear apparatus 19 (equivalent to a differential apparatus disclosed here). The differential gear apparatus 19 distributes power of the electric motor 11 to the pair of drive axles 18. Specifically, the differential gear apparatus 19 transmits torque (power), which has been speed-reduced and transmitted from the electric motor 11 to the differential gear apparatus 19 via the first speed reduction gear pair 14 and the second speed reduction gear pair 16, to the pair of drive axles 18 while allowing a difference between the rotational speeds of the pair of drive axles 18. The rotation of the pair of drive axles 18 is driven, and thus, the rotation of the rear wheels 41 and 42 is driven via drive shafts 51 and 52 (to be described later). The first speed reduction gear pair 14, the second speed reduction gear pair 16, and the differential gear apparatus 19 are equivalent to a transmission unit disclosed here.

The transaxle case 20 accommodates the electric motor 11; the output shaft 12; the countershaft 13; the first speed reduction gear pair 14; the differential case 15; the second speed reduction gear pair 16; the pair of drive axles 18; and the differential gear apparatus 19. The transaxle case 20 is formed into a cylindrical shape, and includes boss portions 20a and 20b which are respectively disposed on both side walls of the transaxle case 20 in the direction of the axial line 18a while being coaxial with the axial line 18a. Opening portions 20a1 and 20b1 are respectively formed inside the boss portions 20a and 20b, and the pair of drive axles 18 pass through the opening portions 20a1 and 20b1.

Lubrication oil (not illustrated) is stored in a bottom portion of the transaxle case 20. The lubrication oil is scooped upward from the bottom portion of the transaxle case 20 by the rotation of the counter driven gear 23 and the final driven gear 26, and is supplied to lubrication portions via oil paths (not illustrated). The lubrication portions are equivalent to meshing portions of the first speed reduction gear pair 14 and the second speed reduction gear pair 16, meshing gear portions and rotational sliding portions of the differential mechanism 17, the bearings 21a, 21b, 24a, 24b, 27a, and 27b, the inside of the output shaft 12, and the like.

Hereinafter, the pair of drive axles 18 will be described in detail.

The pair of drive axles 18 drive the rotation of the rear wheels 41 and 42 with torque (power), which is transmitted from the electric motor 11, via the drive shafts 51 and 52 (to be described later). The pair of drive axles 18 are a right drive axle 18c (equivalent to a second drive axle disclosed here), and a left drive axle 18b (equivalent to a first drive axle disclosed here).

The left drive axle 18b is disposed to pass through the left opening portion 20a1. A right end portion 18bR (equivalent to a second end portion disclosed here) of the left drive axle 18b is integrally connected to the left side gear 28a. A left end portion 18bL (equivalent to a first end portion disclosed here) of the left drive axle 18b is disposed such that the left end portion 18bL is positioned outside the transaxle case 20. A right end portion of the drive shaft 51 is connected to the left end portion 18bL of the left drive axle 18b. The rear wheel 41 is connected to a left end portion of the drive shaft 51.

A bearing 31 is fitted onto the left drive axle 18b. The bearing 31 is a rolling bearing, and is disposed in the opening portion 20a1. The left drive axle 18b is rotatably supported by the transaxle case 20 via the bearing 31. In addition, the left drive axle 18b is rotatably supported by the bearing 27a via the boss portion 15a of the differential case 15. As such, the bearings 31 and 27a rotatably support the left drive axle 18b inside the transaxle case 20. The bearings 31 and 27a are equivalent to a pair of bearings disclosed here.

The left drive axle 18b is disposed between the bearings 31 and 27a inside the output shaft 12 in such a way as to coaxially pass through the output shaft 12. As such, the output shaft 12 is disposed between the bearings 31 and 27a.

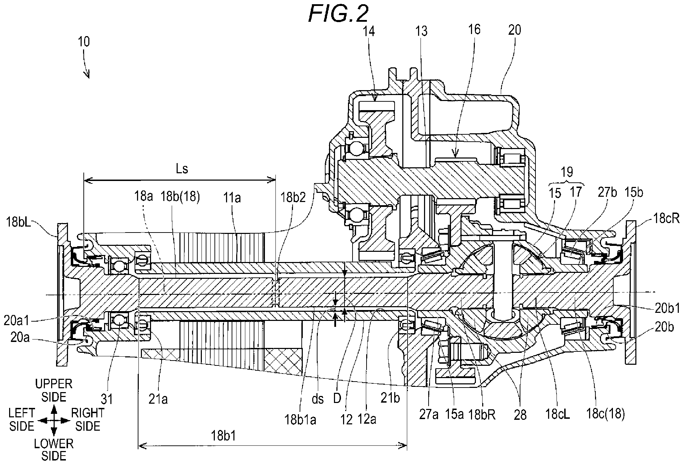

As illustrated in Fig. 2, a predetermined diameter shaft portion 18b1 and a recessed portion 18b2 are formed in the left drive axle 18b.

The predetermined diameter shaft portion 18b1 is formed in a portion of the left drive axle 18b which is positioned inside the output shaft 12. A shaft diameter D of the predetermined diameter shaft portion 18b1 is set such that an outer circumferential wall surface 18b1 a of the predetermined diameter shaft portion 18b1 is spaced by a predetermined distance ds from an inner circumferential wall surface 12a of the output shaft 12 in a radial direction. The predetermined distance ds is set such that, even if it is assumed that the left drive axle 18b is cut at any position on the predetermined diameter shaft portion 18b1, and the left drive axle 18b oscillates, the outer circumferential wall surface 18b1a of the predetermined diameter shaft portion 18b1 does not come into contact with the inner circumferential wall surface 12a of the output shaft 12. The predetermined distance ds is set based on the amount of backlash (gaps) of the bearings 31 and 27a, dimension variations of the left drive axle 18b and the output shaft 12, and the like. The shaft diameter D of the predetermined diameter shaft portion 18b1 is set to be smaller than that of other portions of the left drive axle 18b.

The recessed portion 18b2 is formed in the outer circumferential wall surface 18b1 a of the predetermined diameter shaft portion 18b1. The recessed portion 18b2 is an annular groove that is formed over the entire circumference of the predetermined diameter shaft portion 18b1. The size and the shaft diameter D of the recessed portion 18b2 are set so as to ensure strength of the left drive axle 18b which is sufficient with respect to specification torque of the rear transaxle 10. The size and the shaft diameter D of the recessed portion 18b2 are set such that the recessed portion 18b2 is the weakest portion on the drive path from the electric motor 11 to the rear wheels 41 and 42.

The position of the recessed portion 18b2 is set such that, even if it is assumed that the left drive axle 18b is cut at the position of the recessed portion 18b2, a portion of the left drive axle 18b on the left side of a cut portion (recessed portion 18b2) does not fall out of the transaxle case 20. Specifically, the recessed portion 18b2 is provided at a position that is spaced by a predetermined distance Ls from a left end of the opening portion 20a1 along the axial line 18a. The predetermined distance Ls is set by taking into consideration the value of sum of the amount of backlash (the length of a gap in the direction of the axial line 18a) of each of the left drive axle 18b, the drive shaft 51, and the rear wheel 41, and the amount of backlash of each connection portion. The predetermined distance Ls is set such that, even if the amount of backlash is taken into consideration, the cut portion of the left drive axle 18b is positioned inside the output shaft 12.

The length of the left drive axle 18b in the direction of the axial line 18a is set to be longer than that of the right drive axle 18c in the direction of the axial line 18a.

As illustrated in Fig. 1, the right drive axle 18c is disposed to pass through the right opening portion 20b1. A left end portion 18cL (equivalent to a second end portion disclosed here) of the right drive axle 18c is integrally connected to the right side gear 28b. A right end portion 18cR (equivalent to a first end portion disclosed here) of the right drive axle 18c is disposed such that the right end portion 18cR is positioned outside the transaxle case 20. A left end portion of the drive shaft 52 is connected to the right end portion 18cR of the right drive axle 18c. The rear wheel 42 is connected to a right end portion of the drive shaft 52. The shaft diameter of the right drive axle 18c is set to be larger than the shaft diameter D of the predetermined diameter shaft portion 18b1.

Seal members 32 are respectively disposed in the opening portions 20a1 and 20b1 so as to seal gaps between the opening portions 20a1 and 20b1 and the pair of drive axles 18. The seal members 32 have an oil sealing function of preventing lubrication oil inside the transaxle case 20 from leaking outward from the opening portions 20a1 and 20b1, and a dust sealing function of preventing the infiltration of foreign matter into the transaxle case 20 through the opening portions 20a1 and 20b1.

Hereinafter, the operation of the rear transaxle 10 when an excessive load is applied to the drive path will be described. For example, the operation is based on the assumption that in a case where the vehicle runs over a curb while the vehicle travels at a predetermined speed or higher, and both the rear wheels 41 and 42 are locked, an excessive load is applied to the drive path, and excessive torque is applied to the pair of drive axles 18.

In a case where excessive torsional torque is applied to the pair of drive axles 18, stress concentrates at the recessed portion 18b2 which is a weak portion on the drive path. Hereinafter, description will be given based on the assumption that the left drive axle 18b is cut at the position of the recessed portion 18b2 due to excessive torsional torque.

In this case, as described above, a portion of the left drive axle 18b on the left side of the cut portion (recessed portion 18b2) does not fall out of the opening portion 20a1, and the cut portion of the left drive axle 18b is positioned inside the output shaft 12. The portion of the left drive axle 18b on the left side of the cut portion oscillates around the bearing 31. In contrast, a portion of the left drive axle 18b on the right side of the cut portion oscillates around the boss portion 15a of the differential case 15. At this time, as described above, the cut portion of the left drive axle 18b does not come into contact with the inner circumferential wall surface 12a of the output shaft 12.

In this case, a load of the rear wheel 41 is not applied to the portion of the left drive axle 18b on the right side of the cut portion. Therefore, power of the electric motor 11 is transmitted to only a left drive axle 18b side, to which a small load is applied, via the differential gear apparatus 19. That is, power of the electric motor 11 is not transmitted to the right drive axle 18c. In this case, the vehicle travels in such a way that the rotation of only the front wheels (not illustrated) is driven by power of the engine (not illustrated).

In the first embodiment, the rear transaxle 10 includes the electric motor 11; the pair of drive axles 18 which drive the rotation of the rear wheels 41 and 42 with power, which is transmitted from the electric motor 11, via the drive shafts 51 and 52 connected to the left end portion 18bL and the right end portion 18cR; the transmission unit that is connected to the right end portion 18bR and the left end portion 18cL of the pair of drive axles 18, and transmits power of the drive source to the pair of drive axles 18; the transaxle case 20 that accommodates at least the transmission unit, and is provided with the pair of opening portions 20a1 and 20b1 through which the pair of drive axles 18 pass such that the left end portion 18bL and the right end portion 18cR are positioned outside the transaxle case 20; the pair of bearings 31 and 27a which rotatably support the left drive axle 18b of the pair of drive axles 18 inside the transaxle case 20; and the output shaft 12 which is formed into a cylindrical shape with both open ends, and in which the left drive axle 18b is disposed between the pair of bearings 31 and 27a in such a way as to coaxially pass through the output shaft 12. The left drive axle 18b includes the predetermined diameter shaft portion 18b1, the shaft diameter D of which is set such that the outer circumferential wall surface 18b1 a is spaced by the predetermined distance ds from the inner circumferential wall surface 12a of the output shaft 12 inside the output shaft 12 in the radial direction. The recessed portion 18b2 is formed in the outer circumferential wall surface 18b1 a of the predetermined diameter shaft portion 18b1.

Therefore, in a case where an excessive load is applied to the drive path from the electric motor 11 to the rear wheels 41 and 42, stress may concentrate at the recessed portion 18b2 formed in the outer circumferential wall surface 18b1 a of the predetermined diameter shaft portion 18b1 of the left drive axle 18b. Since the recessed portion 18b2 is positioned inside the transaxle case 20, it is possible to form a weak portion, which is cut by an excessive load, on the drive path inside the transaxle case 20. Therefore, even if it is assumed that the left drive axle 18b is cut at the position of the recessed portion 18b2, it is possible to prevent the cut portion of the left drive axle 18b from oscillating outside the vehicle, or to prevent contact between the cut portion of the left drive axle 18b and the vehicle or a road surface. As a result, even if an excessive load is applied to the drive path, it is possible to prevent the excessive load from affecting the motion of the vehicle.

The recessed portion 18b2 is positioned inside the output shaft 12, and the outer circumferential wall surface 18b1a of the predetermined diameter shaft portion 18b1 of the left drive axle 18b is spaced by the predetermined distance ds from the inner circumferential wall surface 12a of the output shaft 12 in the radial direction of the drive axles 18. Therefore, even if it is assumed that the left drive axle 18b is cut at the position of the recessed portion 18b2, it is possible to prevent contact between the cut portion of the left drive axle 18b and the inner circumferential wall surface 12a of the output shaft 12. As a result, it is possible to prevent the influence to the motion of the vehicle due to contact between the cut portion of the left drive axle 18b and the inner circumferential wall surface 12a of the output shaft 12. It is possible to remove a concern such as the occurrence of seizure which is caused by frictional heat generated by repeated contact between the outer circumferential wall surface 18b1 a of the left drive axle 18b and the inner circumferential wall surface 12a of the output shaft 12.

The recessed portion 18b2 is provided at the position that is spaced by the predetermined distance Ls from the opening portion 20a1, through which the left drive axle 18b passes, in the direction of the axial line 18a.

Specifically, the recessed portion 18b2 is provided at the position that is spaced by the predetermined distance Ls from the opening portion 20a1 in the direction of the axial line 18a, based on the amount of backlash formed in each of the rear wheels 41 and 42, the drive shafts 51 and 52, and the drive axles 18b and 18c. Therefore, even if it is assumed that the left drive axle 18b is cut at the position of the recessed portion 18b2, a portion of the left drive axle 18b on the left side of the cut portion can be prevented from falling out of the transaxle case 20 through the opening portion 20a1. As a result, it is possible to reliably prevent the influence to the motion of the vehicle due to contact between the cut portion of the left drive axle 18b and a road surface or the like.

The length of the left drive axle 18b in the direction of the axial line 18a is set to be longer than that of the right drive axle 18c in the direction of the axial line 18a.

Therefore, it is possible to further increase the predetermined distance Ls. As a result, even if it is assumed that the left drive axle 18b is cut at the position of the recessed portion 18b2, a portion of the left drive axle 18b on the left side of the cut portion can be prevented from falling out of the transaxle case 20 through the opening portion 20a1.

The rear transaxle 10 further includes the differential gear apparatus 19 that distributes power of the electric motor 11 to the pair of drive axles 18.

Therefore, in a case where it is assumed that the left drive axle 18b is cut, a load of the rear wheel 41 is not applied to a portion of the left drive axle 18b on the right side of cutting. In this case, as described above, power of the electric motor 11 is not transmitted to the right drive axle 18c via the differential gear apparatus 19. Since power of the electric motor 11 is not transmitted to both the rear wheels 41 and 42, the motion of the vehicle is further prevented from being affected compared to that in a case where the rear transaxle 10 does not include the differential gear apparatus 19, and the rotation of only the right drive axle 18c or the rear wheel 42 is driven by power of the electric motor 11.

The drive source of the first embodiment is the electric motor 11, and is disposed inside the transaxle case 20. The cylindrical member of the first embodiment is the output shaft 12 of the electric motor 11.

Therefore, also, in the rear transaxle 10 in which the drive source is the electric motor 11 disposed inside the transaxle case 20, and the left drive axle 18b coaxially passes through the inside of the output shaft 12 of the electric motor 11, in a case where it is assumed that the left drive axle 18b is cut at the position of the recessed portion 18b2, the motion of the vehicle is prevented from being affected.

### Second Embodiment

Hereinafter, the points of difference of the rear transaxle 10 in a second embodiment disclosed here from that of the first embodiment will be mainly described. In the second embodiment, in addition to the configuration of the first embodiment, a protrusion portion 118b3 is formed in the left drive axle 18b.

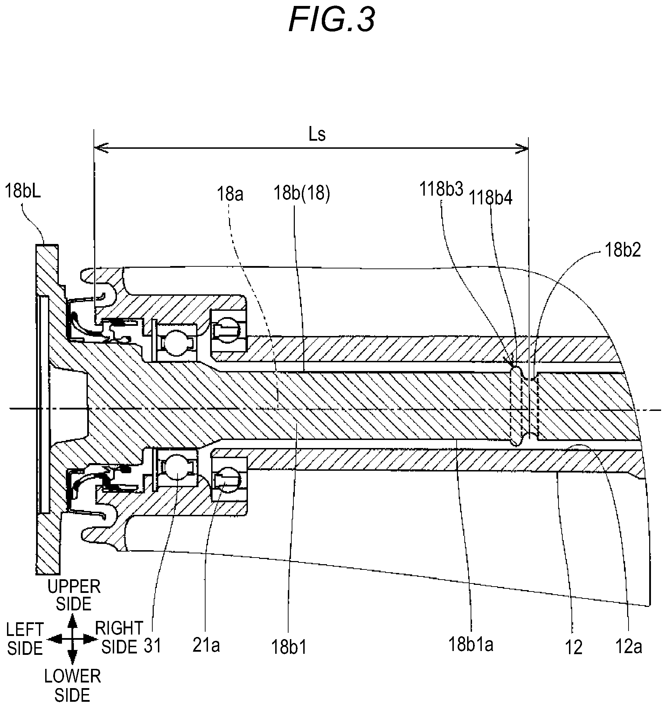

As illustrated in Fig. 3, the protrusion portion 118b3 having an annular shape is formed in the vicinity of the recessed portion 18b2 on the outer circumferential wall surface 18b1a of the predetermined diameter shaft portion 18b1 such that the protrusion portion 118b3 protrudes outward over the entire circumference of the predetermined diameter shaft portion 18b1 in the radial direction. In the second embodiment, the protrusion portion 118b3 is formed adjacent to the left side of the recessed portion 18b2. A tip end portion 118b4 is formed as a curved surface over the entire circumference of the protrusion portion 118b3. The size of the protrusion portion 118b3 is set such that the tip end portion 118b4 does not come into contact with the inner circumferential wall surface 12a of the output shaft 12.

In a case where it is assumed that the left drive axle 18b is cut at the position of the recessed portion 18b2, as described above, the left portion of the left drive axle 18b oscillates around the bearing 31. The size of the protrusion portion 118b3 is set such that in this case, the tip end portion 118b4 does not come into contact with the inner circumferential wall surface 12a of the output shaft 12. Since lubrication oil is supplied to the inside of the output shaft 12 as described above, even if the tip end portion 118b4 comes into contact with, and slides against the inner circumferential wall surface 12a of the output shaft 12, sliding resistance between the tip end portion 118b4 and the inner circumferential wall surface 12a is reduced.

In the second embodiment, the annular protrusion portion 118b3 is formed in the vicinity of the recessed portion 18b2 on the outer circumferential wall surface 18b1a of the predetermined diameter shaft portion 18b1 of the left drive axle 18b such that the protrusion portion 118b3 protrudes outward over the entire circumference of the predetermined diameter shaft portion 18b1 in the radial direction, and the tip end portion 118b4 is formed as a curved surface.

Therefore, in a case where the left drive axle 18b is cut at the position of the recessed portion 18b2, the protrusion portion 118b3 may come into contact with and slide against the inner circumferential wall surface 12a of the output shaft 12. As a result, the oscillation angle of the left drive axle 18b can be further reduced compared to that in a case where the protrusion portion 118b3 is not formed, and thus, a load applied to the bearing 31 is reduced. Since the tip end portion 118b4 of the protrusion portion 118b3 is formed as a curved surface in this case, it is possible to prevent the scratch of the inner circumferential wall surface 12a of the output shaft 12. Since the tip end portion 118b4 of the protrusion portion 118b3 is formed as a curved surface in this case, it is possible to reduce sliding resistance between the tip end portion 118b4 and the inner circumferential wall surface 12a. As a result, it is possible to prevent the occurrence of seizure caused by frictional heat generated between the tip end portion 118b4 and the inner circumferential wall surface 12a.

In the embodiments, merely examples of the rear transaxle 10 are illustrated. This disclosure is not limited to the configurations, and other configuration can be adopted. In the first embodiment, the recessed portion 18b2 is formed as an annular groove in the predetermined diameter shaft portion 18b1. Alternatively, the recessed portion 18b2 may be formed in a portion of the predetermined diameter shaft portion 18b1 in a circumferential direction.

In the embodiments, the predetermined diameter shaft portion 18b1 is formed in the left drive axle 18b. Alternatively, the predetermined diameter shaft portion 18b1 may be formed in the right drive axle 18c. In this case, the length of the right drive axle 18c in the direction of the axial line 18a may be set to be longer than that of the left drive axle 18b in the direction of the axial line 18a.

In the second embodiment, the protrusion portion 118b3 is formed on the left side of the recessed portion 18b2. Alternatively, the protrusion portion 118b3 may be formed on the right side of the recessed portion 18b2. The protrusion portions 118b3 may be respectively formed on both sides of the recessed portion 18b2.

In the embodiments, the electric motor 11 is disposed inside the transaxle case 20. Alternatively, the electric motor 11 may be disposed outside the transaxle case 20.

In the embodiments, the rear transaxle 10 includes the differential gear apparatus 19. Alternatively, the rear transaxle 10 may not include the differential gear apparatus 19. In this case, the pair of drive axles 18 may be connected to each other, and the integral rotation of the pair of drive axles 18 may be driven via the final driven gear 26.

In the embodiments, the rear transaxle 10 includes the electric motor 11 as a drive source. Alternatively, an engine may be a drive source. In this case, the rear transaxle 10 may transmit drive force of the engine to the differential case 15 without including the speed reduction gear pairs 14 and 16. Since the cylindrical member is not equivalent to the output shaft 12 of the electric motor 11 in this case, the cylindrical member may be formed integrally with the transaxle case 20.

A change may be made to the length and the position of the predetermined diameter shaft portion 18b1, the shape and the position of the recessed portion 18b2, or the shape and the position of the protrusion portion 118b3, insofar as the change does not depart from the concept of this disclosure.

## Claims

1. A vehicle drive apparatus (10) comprising:
a drive source (11);
a pair of drive axles (18) which drives the rotation of vehicle wheels (41,42) with power, which is transmitted from the drive source, via drive shafts (51, 52) connected to first end portions (18bL, 18cR) of the pair of drive axles;
a transmission unit (14) that is connected to second end portions (18cL, 18bR) of the pair of drive axles, and transmits the power of the drive source to the pair of drive axles;
a casing (20) that accommodates at least the transmission unit, and is provided with a pair of opening portions (20a1, 20b1) through which the pair of drive axles pass such that the first end portions are positioned outside the casing;
a pair of bearings (27a, 31) which rotatably support one drive axle of the pair of drive axles inside the casing; and
a cylindrical member (12) which is formed into a cylindrical shape with both open ends, and in which the one drive axle (18b) is disposed between the pair of bearings in such a way as to coaxially pass through the cylindrical member,
wherein the one drive axle (18b) includes a predetermined diameter shaft portion (18b1), the shaft diameter (D) of which is set such that an outer circumferential wall surface (18b1a) is spaced by a predetermined distance (ds) from an inner circumferential wall surface (12a) of the cylindrical member inside the cylindrical member in a radial direction,
**characterised in that**
a recessed portion (18b2) is formed in the outer circumferential wall surface of the predetermined diameter shaft portion.

2. The vehicle drive apparatus according to claim 1,
wherein the recessed portion (18b2) is provided at a position that is spaced by a predetermined distance (Ls) from the opening portion, through which the one drive axle (18b) passes, in the direction of an axial line of the one drive axle.

3. The vehicle drive apparatus according to claim 2,
wherein the length of the one drive axle (18b) in the direction of the axial line is set to be longer than that of the other drive axle (18c) of the pair of drive axles in the direction of the axial line.

4. The vehicle drive apparatus according to any one of claims 1 to 3,
wherein an annular protrusion portion (118b3) is formed in the vicinity of the recessed portion (18b2) on the outer circumferential wall surface of the one drive axle such that the protrusion portion protrudes outward over the entire circumference of the one drive axle in the radial direction, and a tip end portion (118b4) is formed as a curved surface.

5. The vehicle drive apparatus according to any one of claims 1 to 4,
wherein the transmission unit further includes a differential apparatus (19) that distributes power of the drive source to the pair of drive axles.

6. The vehicle drive apparatus according to any one of claims 1 to 5,
wherein the drive source is an electric motor (11), and is disposed inside the casing (20), and
wherein the cylindrical member (12) is an output shaft of the electric motor.

## Patentansprüche

1. Fahrzeugantriebsvorrichtung (10), mit:
einer Antriebsquelle (11);
einem Paar von Antriebsachsen (18), das die Drehung von Fahrzeugreifen (41, 42) mit einer Kraft antreibt, die von der Antriebsquelle über Antriebswellen (51, 52), die mit ersten Endbereichen (18bL, 18cR) des Paars von Antriebsachsen verbunden sind, übertragen wird;
einer Getriebeeinheit (14), die mit zweiten Endbereichen (18cL, 18bR) des Paars von Antriebsachsen verbunden ist und die Leistung der Antriebsquelle auf das Paar von Antriebsachsen überträgt;
einem Gehäuse (20), das wenigstens die Getriebeeinheit aufnimmt und mit einem Paar von Öffnungsbereichen (20a1, 20b1) versehen ist, durch die das Paar von Antriebsachsen derart hindurchläuft, dass die ersten Endbereiche außerhalb des Gehäuses positioniert sind;
einem Paar von Lagern (27a, 31), das eine Antriebsachse des Paars von Antriebsachsen innerhalb des Gehäuses drehbar lagert; und
einem zylindrischen Element (12), das in einer zylindrischen Form mit zwei offenen Enden ausgebildet ist und in dem die eine Antriebsachse (18b) zwischen dem Paar von Lagern auf solch eine Art und Weise angeordnet ist, dass sie koaxial durch das zylindrische Element hindurchläuft,
bei der die eine Antriebsachse (18b) einen Wellenbereich (18b1) mit vorgegebenem Durchmesser aufweist, dessen Wellendurchmesser (D) derart festgelegt ist, dass eine äußere Umfangswandfläche (18b1a) um einen vorgegebenen Abstand (ds) von einer inneren Umfangswandfläche (12a) des zylindrischen Elements im Inneren des zylindrischen Elements in einer radialen Richtung beabstandet ist,
**dadurch gekennzeichnet, dass**
ein ausgesparter Bereich (18b2) in der äußeren Umfangswandfläche des Wellenbereichs mit vorgegebenem Durchmesser ausgebildet ist.

2. Fahrzeugantriebsvorrichtung nach Anspruch 1,
bei der der ausgesparte Bereich (18b2) an einer Position vorgesehen ist, die um einen vorgegebenen Abstand (Ls) von dem Öffnungsbereich, durch den die eine Antriebsachse (18b) hindurchläuft, in der Richtung einer axialen Linie der einen Antriebsachse beabstandet ist.

3. Fahrzeugsantriebsvorrichtung nach Anspruch 2,
bei der die Länge der einen Antriebsachse (18b) in der Richtung der axialen Linie derart festgelegt ist, dass sie länger als die der anderen Antriebsachse (18c) des Paars von Antriebsachsen in der Richtung der axialen Linie ist.

4. Fahrzeugantriebsvorrichtung nach einem der Ansprüche 1 bis 3,
bei der ein ringförmiger Vorsprungsbereich (118b3) in der Umgebung des ausgesparten Bereichs (18b2) auf der äußeren Umfangswandfläche der einen Antriebsachse derart ausgebildet ist, dass der Vorsprungsbereich über den gesamten Umfang der einen Antriebsachse in der radialen Richtung nach außen hervorsteht, und ein Spitzenendbereich (118b4) als eine gebogene Fläche ausgebildet ist.

5. Fahrzeugantriebsvorrichtung nach einem der Ansprüche 1 bis 4,
bei der die Getriebeeinheit ferner eine Differentialvorrichtung (19) aufweist, die eine Leistung der Antriebsquelle auf das Paar von Antriebsachsen verteilt.

6. Fahrzeugantriebsvorrichtung nach einem der Ansprüche 1 bis 5,
bei der die Antriebsquelle ein elektrischer Motor (11) ist und im Inneren des Gehäuses (20) angeordnet ist, und
bei der das zylindrische Element (12) eine Ausgangswelle des elektrischen Motors ist.

## Revendications

1. Appareil d'entraînement de dispositif (10) comprenant :
une source d'entraînement (11) ;
une paire d'essieux d'entraînement (18) qui entraîne la rotation de roues de véhicule (41, 42) avec de la puissance qui est transmise de la source d'entraînement par le biais d'arbres d'entraînement (51, 52) reliés aux premières parties d'extrémité (18bL, 18cR) de la paire d'essieux d'entraînement ;
une unité de transmission (14) qui est reliée aux secondes parties d'extrémité (18cL, 18bR) de la paire d'essieux d'entraînement, et transmet la puissance de la source d'entraînement à la paire d'essieux d'entraînement ;
un boîtier (20) qui loge au moins l'unité de transmission, et est doté d'une paire de parties d'ouverture (20a1, 20b1) par laquelle la paire d'essieux d'entraînement passent de sorte que les premières parties d'extrémité soient positionnées en dehors du boîtier ;
une paire de paliers (27a, 31) qui supportent de manière rotative un essieu d'entraînement de la paire d'essieux d'entraînement dans le boîtier ; et
un élément cylindrique (12) qui est réalisé en une forme cylindrique avec les deux extrémités ouvertes, et dans lequel l'essieu d'entraînement (18b) est disposé entre la paire de paliers de manière à passer coaxialement par l'élément cylindrique,
dans lequel l'un essieu d'entraînement (18b) inclut une partie d'arbre de diamètre prédéterminé (18b1), dont le diamètre d'arbre (D) est défini de sorte qu'une surface de paroi circonférentielle extérieure (18b1a) soit espacée d'une distance prédéterminée (ds) d'une surface de paroi circonférentielle intérieure (12a) de l'élément cylindrique dans l'élément cylindrique dans une direction radiale,
**caractérisé en ce que**
une partie évidée (18b2) est formée dans la surface de paroi circonférentielle extérieure de la partie d'arbre de diamètre prédéterminé.

2. Appareil d'entraînement de véhicule selon la revendication 1,
dans lequel la partie évidée (18b2) est prévue sur une position qui est espacée d'une distance prédéterminée (Ls) de la partie d'ouverture, par laquelle l'un essieu d'entraînement (18b) passe, dans la direction d'une ligne axiale de l'un essieu d'entraînement.

3. Appareil d'entraînement de véhicule selon la revendication 2,
dans lequel la longueur de l'un essieu d'entraînement (18b) dans la direction de la ligne axiale est définie pour être plus longue que celle de l'autre essieu d'entraînement (18c) de la paire d'essieux d'entraînement dans la direction de la ligne axiale.

4. Appareil d'entraînement de véhicule selon l'une quelconque des revendications 1 à 3,
dans lequel une partie de saillie annulaire (118b3) est formée à proximité de la partie évidée (18b2) sur la surface de paroi circonférentielle extérieure de l'un essieu d'entraînement de sorte que la partie de saillie fasse saillie vers l'extérieur sur la circonférence entière de l'un essieu d'entraînement dans la direction radiale, et une partie d'extrémité de bout (118b4) est formée comme une surface courbée.

5. Appareil d'entraînement de véhicule selon l'une quelconque des revendications 1 à 4,
dans lequel l'unité de transmission inclut en outre un appareil différentiel (19) qui distribue la puissance de la source d'entraînement à la paire d'essieux d'entraînement.

6. Appareil d'entraînement de véhicule selon l'une quelconque des revendications 1 à 5,
dans lequel la source d'entraînement est un moteur électrique (11), et est disposée dans le boitier (20), et
dans lequel l'élément cylindrique (12) est un arbre de sortie du moteur électrique.
